# EUROPEAN PATENT APPLICATION

(11) **EP 4 821 660 A1**
(43) Date of publication of application: **14.10.2026**
(21) Application number: 24899479.0
(22) Date of filing: 18.10.2024
(51) Int. Cl.: B29C 64/20, B22F 12/00, B33Y 30/00

(54) **3D PRINTER AND 3D PRINTING SYSTEM**

(30) Priority: 07.12.2023 CN 202323362806 U
(71) Applicant: Shenzhen Tuozhu Technology Co., Ltd., Shenzhen, Guangdong 518000 (CN)
(72) Inventor: ZHAO, Bo, Shenzhen, Guangdong 518000 (CN); XIONG, Rongming, Shenzhen, Guangdong 518000 (CN); TIAN, Kaiwang, Shenzhen, Guangdong 518000 (CN)
(74) Representative: Grünecker Patent- und Rechtsanwälte PartG mbB
(86) International application number: PCT/CN2024/125633
(87) International publication number: WO 2025/118835

(57) **Abstract**

The present application provides a 3D printer and a 3D printing system. The 3D printer comprises a first vertical column, a second vertical column, a mounting seat, and a base. The first vertical column and the second vertical column are disposed at an interval, and the mounting seat is connected between the first vertical column and the second vertical column. The base is disposed passing between the first vertical column and the second vertical column, one side of the base being connected to the mounting seat, and the other side of the base, facing away from the mounting seat, being used to connect to a printing platform of the 3D printer in a sliding manner. The implementation of the present application, can solve the problem of assembly steps of a 3D printer being complicated.

## Description

The present application claims priority to Chinese Patent Application No. 2023233628069, filed with the China National Intellectual Property Administration on December 7, 2023 and entitled "3D PRINTER AND 3D PRINTING SYSTEM", the content of which is incorporated herein by reference in its entirety.

### TECHNICAL FIELD

The present application relates to the technical field of three-dimensional object printing devices, and in particular to a 3D printer and a 3D printing system.

### BACKGROUND

A 3D printer, as a rapid prototyping device, is widely used in various fields. The 3D printer can create a three-dimensional object based on a digital model file by using bondable materials such as special wax, powdered metal, or plastic. Typically, the 3D printer achieves motion through drive assemblies in the Y-axis direction, the X-axis direction, and the Z-axis direction. Currently, most 3D printers are assembled by splicing parts or components. This results in problems such as complicated assembly steps, high assembly difficulty, and excessively long assembly time, thereby affecting the user experience.

### SUMMARY

The present application provides a 3D printer and a 3D printing system, which can solve the problem of complicated assembly steps of the 3D printer.

In a first aspect, the present application provides a 3D printer. The 3D printer includes a first column, a second column, a mounting seat, and a base, where the first column and the second column are spaced apart from each other, and the mounting seat is connected between the first column and the second column;
the base extends between the first column and the second column, one side of the base is connected to the mounting seat, and the other side of the base facing away from the mounting seat is configured to be slidably connected to a print table of the 3D printer.

According to the present application, the mounting seat and the base are disposed between the first column and the second column, and the 3D printer according to embodiments of the present application can be assembled simply by connecting the mounting seat and the base, thereby simplifying the assembly steps of the 3D printer and shortening the assembly time. Moreover, the mounting seat and the base have a large connection area, and thus are firmly connected, which improves the structural stability of the 3D printer and enhances the operational stability of the 3D printer.

In an embodiment, the base is provided with a first clamping portion and a second clamping portion on both sides in a width direction of the 3D printer, and the first clamping portion and the second clamping portion penetrate through the base along a height direction of the 3D printer;
an opening direction of the first clamping portion and an opening direction of the second clamping portion are disposed back to back, the first clamping portion and the first column are in clamping engagement with each other, and the second clamping portion and the second column are in clamping engagement with each other.

In the 3D printer according to the present application, by providing the first clamping portion and the second clamping portion to be respectively in clamping engagement with the first column and the second column, the movement of the base in the Y-axis direction and the X-axis direction is limited, and the structural stability of the 3D printer is improved.

In an embodiment, the first column includes a first column body and a first end portion, the first end portion being connected to one end of the first column body; the second column includes a second column body and a second end portion, the second end portion being connected to one end of the second column body; in the width direction of the 3D printer, a spacing between the first column body and the second column body is greater than a spacing between the first end portion and the second end portion;
the mounting seat is connected between the first end portion and the second end portion, the first clamping portion and the first end portion are in clamping engagement with each other, and the second clamping portion and the second end portion are in clamping engagement with each other.

In the present application, by reducing the spacing between the first end portion and the second end portion, when the base is mounted on a frame module, the base can be more precisely confined between the first end portion and the second end portion, thereby improving the accuracy of the fit between the base and the frame module and further enhancing the structural stability of the 3D printer. In addition, the base can rotate by a certain angle between the first column body and the second column body and then move downward to be connected to the first end portion and the second end portion, thereby achieving a simple top-down assembly mode of the 3D printer and improving the production efficiency.

In an embodiment, the mounting seat includes a first mounting portion and a second mounting portion, the second mounting portion extends along the width direction of the 3D printer and is connected between the first column and the second column, one end of the first mounting portion is fixedly connected to the second mounting portion, and the other end of the first mounting portion protrudes from the second mounting portion and extends along a length direction of the 3D printer.

In this embodiment, by providing the first mounting portion protruding from the second mounting portion in the length direction of the 3D printer, the center of gravity of the frame module is lowered, the structural stability of the frame module is enhanced, and the possibility of instability of the frame module is reduced.

In an embodiment, the base includes a base body and a sliding member; the sliding member is mounted on the base body and is configured to be slidably connected to the print table; the base body extends between the first column and the second column and is connected to the mounting seat.

In an embodiment, the 3D printer further includes a first fixing member and a second fixing member, the first fixing member connects the sliding member and the first mounting portion, and the second fixing member connects the base body and the second mounting portion.

In an embodiment, the sliding member includes a main body and a conveyor belt, the conveyor belt is mounted on the main body and is connected to the print table, and a conveying direction of the conveyor belt is parallel to the length direction of the 3D printer;
the first fixing member includes at least two sub-fixing members, and the at least two sub-fixing members are respectively disposed on two sides of the conveyor belt in the width direction of the 3D printer. The implementation of the present application is conducive to improving the connection stability of the conveyor belt and the sliding member with the first fixing member.

In an embodiment, the sliding member is provided with a first mounting hole, and the first mounting hole penetrates through the sliding member in the height direction of the 3D printer; the base body is provided with a second mounting hole, and the second mounting hole penetrates through the base body in the height direction of the 3D printer;
the first mounting portion is provided with a first fixing hole, the second mounting portion is provided with a second fixing hole, and an opening of the first fixing hole and an opening of the second fixing hole both face the base;
the first fixing hole is in communication with the first mounting hole, and the first fixing member passes through the first mounting hole and the first fixing hole; the second fixing hole is in communication with the second mounting hole, and the second fixing member passes through the second mounting hole and the second fixing hole.

The assembly direction of the 3D printer according to the present application is the negative Z-axis direction. During the assembly process, the 3D printer according to the present application follows a consistent assembly direction and always remains a top-to-bottom working mode, without the need for flipping operations, thereby reducing the assembly difficulty and significantly shortening the assembly time of the 3D printer.

In an embodiment, the sliding member includes a main body and a conveyor belt, the conveyor belt is mounted on the main body and is connected to the print table, and a conveying direction of the conveyor belt is parallel to the length direction of the 3D printer;
a plurality of first mounting holes are provided, the plurality of first mounting holes form two first mounting hole groups, and in the width direction of the 3D printer, the two first mounting hole groups are respectively located on two sides of the conveyor belt.

In the 3D printer according to the present application, in the width direction of the 3D printer, a first sub-mounting hole group and a second sub-mounting hole group are respectively located on the two sides of the conveyor belt, which is conducive to improving the connection stability of the conveyor belt and the sliding member with a first mounting seat.

In an embodiment, the second mounting portion is provided with a first protruding rib and a second protruding rib, and in the length direction of the 3D printer, the first protruding rib and the second protruding rib are respectively disposed on two sides of the second mounting portion;
a plurality of second fixing holes are provided, the plurality of second fixing holes form two second fixing hole groups, and the two second fixing hole groups are respectively formed in the first protruding rib and the second protruding rib.

In the 3D printer according to the present application, the two second fixing hole groups are disposed on the two sides of the second mounting portion in the length direction of the 3D printer, which is conducive to improving the connection stability between the base body and a second mounting seat. In an embodiment, the base is provided with a mounting groove, an opening of the mounting groove faces the mounting seat, the mounting groove penetrates through the base along a width direction of the 3D printer, and the mounting seat is accommodated in the mounting groove.

In the 3D printer according to the present application, the mounting seat is accommodated in the mounting groove of the base, which further restricts the movement of the base in the length direction and the width direction of the 3D printer, improves the assembly stability of the 3D printer, and enhances the operational stability of the 3D printer.

In an embodiment, the 3D printer further includes a guide rod, the guide rod being configured to be slidably connected to a printing head of the 3D printer;
where the guide rod is slidably connected between the first column and the second column and is located on one side of the base facing away from the mounting seat.

In a second aspect, the present application provides a 3D printing system. The 3D printing system includes a feeding device and a 3D printer. The feeding device is configured to provide a printing material to the 3D printer.

### BRIEF DESCRIPTION OF THE DRAWINGS

FIG. 1 is a schematic diagram of a scenario of a 3D printing system according to an embodiment of the present application;
FIG. 2 is a schematic structural diagram of a frame module and a printing head shown in FIG. 1;
FIG. 3 is a cross-sectional diagram of a partial structure of the frame module shown in FIG. 2 taken along line A-A;
FIG. 4 is a schematic structural diagram of a printing module shown in FIG. 1;
FIG. 5 is a schematic structural diagram of a base shown in FIG. 4 from one angle;
FIG. 6 is a schematic structural diagram of the base shown in FIG. 4 from another angle;
FIG. 7 is a schematic diagram of an assembly structure of a 3D printer shown in FIG. 1;
FIG. 8 is a first schematic assembly diagram of the printing module and the frame module shown in FIG. 1;
FIG. 9 is a second schematic assembly diagram of the printing module and the frame module shown in FIG. 1; and
FIG. 10 is a third schematic assembly diagram of the printing module and the frame module shown in FIG. 1.

### DETAILED DESCRIPTION

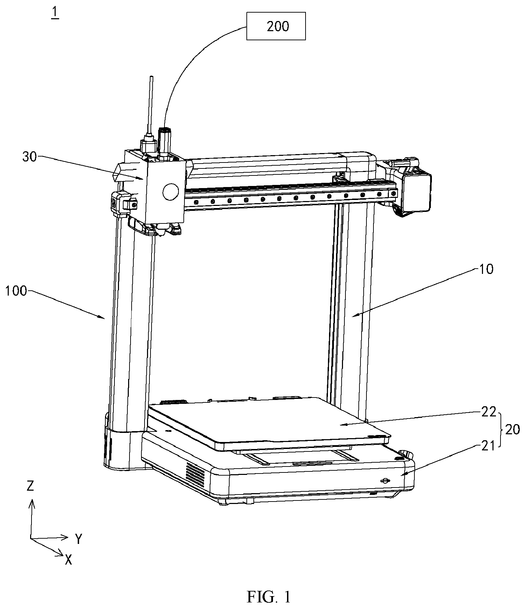

Technical solutions in embodiments of the present application will be clearly and fully described below with reference to the accompanying drawings in the embodiments of the present application. Referring to FIG. 1, FIG. 1 is a schematic diagram of a scenario of a 3D printing system 1 according to an embodiment of the present application. As shown in FIG. 1, the 3D printing system 1 includes a 3D printer 100 and a feeding device 200 for providing a printing material to the 3D printer 100.

For ease of description, a length direction of the 3D printer 100 shown in FIG. 1 is defined as an X-axis direction, a width direction of the 3D printer 100 is defined as a Y-axis direction, a height direction of the 3D printer 100 is defined as a Z-axis direction, and the X-axis direction, Y-axis direction, and Z-axis direction are mutually perpendicular to each other. In addition, in the description of the present application, two surfaces being "disposed opposite to each other" means that the two surfaces are disposed facing each other, and two surfaces being "disposed back to back" means that the two surfaces are disposed facing away from each other.

The 3D printer 100 includes a frame module 10, a printing module 20, and a printing head 30. The feeding device 200 is connected to the printing head 30. During the feeding process of the feeding device 200, the printing material enters the printing head 30 via a filament tube of the feeding device 200, and is heated by the printing head 30 to a molten state and then extruded to the printing module 20 for three-dimensional object printing.

Specifically, the printing head 30 includes an extrusion assembly (not shown in FIG. 1) and a hot end (not shown in FIG. 1). The extrusion assembly conveys the printing material, provided by the feeding device 200 to the 3D printer 100, toward the hot end. The hot end has a heating function. The hot end heats the printing material to a molten state and extrudes the printing material in the molten state onto the printing module 20.

Illustratively, the hot end includes heat sink fins, a nozzle, and a throat pipe located between the heat sink fins and the nozzle. The printing material sequentially passes through the heat sink fins, the throat pipe, and the nozzle. Specifically, the printing material is heated to a molten state at the nozzle, and the nozzle extrudes the printing material in the molten state onto a print table of the printing module 20. During the movement of the printing head 30 relative to the printing module 20 along a printing path, the nozzle extrudes the printing material in the molten state to different positions of the print table layer by layer, thereby printing a three-dimensional object.

Illustratively, the extrusion assembly includes a drive wheel and a driven wheel disposed opposite to the drive wheel, and the printing material passes between the drive wheel and the driven wheel. The drive wheel rotates in a first direction to drive the printing material to be conveyed to the hot end; the drive wheel rotates in a second direction opposite to the first direction to drive the printing material to be retracted back to the feeding device 200.

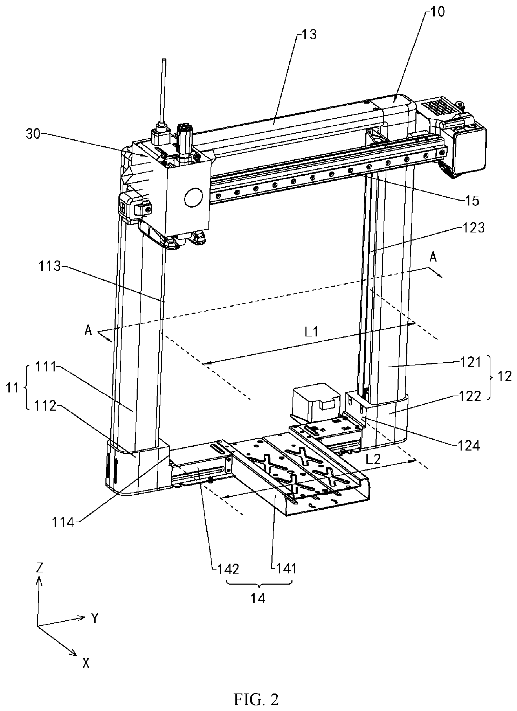

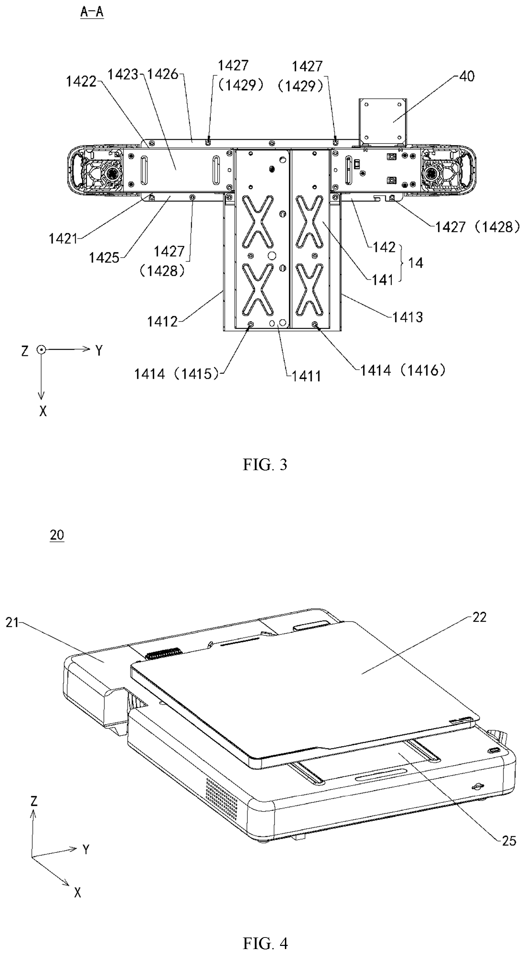

Referring to FIGs. 2 and 3 together, FIG. 2 is a schematic structural diagram of the frame module 10 and the printing head 30 shown in FIG. 1, and FIG. 3 is a cross-sectional diagram of a partial structure of the frame module 10 shown in FIG. 2 taken along line A-A.

As shown in FIG. 2, the frame module 10 includes a first column 11, a second column 12, a top rod 13, a mounting seat 14, and a guide rod 15. The first column 11 and the second column 12 are spaced apart from each other. The top rod 13, the mounting seat 14, and the guide rod 15 are all connected between the first column 11 and the second column 12, and all extend along the Y-axis direction.

For ease of description, a width direction of the frame module 10 is set to be consistent with the width direction of the 3D printer 100, that is, the Y-axis direction; a thickness direction of the frame module 10 is set to be consistent with the length direction of the 3D printer 100, that is, the X-axis direction; a height direction of the frame module 10 is set to be consistent with the height direction of the 3D printer 100, that is, the Z-axis direction.

In some feasible embodiments, the first column 11 and the second column 12 are both column bodies, and the first column 11 and the second column 12 are spaced apart from each other.

Optionally, in some feasible embodiments, the first column 11 includes a first column body 111 and a first end portion 112, and the first end portion 112 is connected to one end of the first column body 111 in the Z-axis direction. In the embodiments, the first column body 111 and the first end portion 112 are both substantially rectangular cubes. The first column body 111 includes a first mounting surface 113, and the first mounting surface 113 is disposed on one side of the first column body 111 in the Y-axis direction. The first end portion 112 includes a second mounting surface 114, the second mounting surface 114 is disposed on one side of the first end portion 112 in the Y-axis direction, and the first mounting surface 113 and the second mounting surface 114 are oriented in the same direction. The second column 12 includes a second column body 121 and a second end portion 122, and the second end portion 122 is connected to one end of the second column body 121 in the Z-axis direction. In this embodiment, the second column body 121 and the second end portion 122 are both substantially rectangular cubes. The second column body 121 includes a third mounting surface 123, and the third mounting surface 123 is disposed on one side of the second column body 121 in the Y-axis direction. The second end portion 122 includes a fourth mounting surface 124, the fourth mounting surface 124 is disposed on one side of the second end portion 122 in the Y-axis direction, and the third mounting surface 123 and the fourth mounting surface 124 are oriented in the same direction.

The first column 11 and the second column 12 both extend in the height direction (Z-axis direction) of the 3D printer 100 and are spaced apart from each other in the width direction (Y-axis direction) of the 3D printer 100. Illustratively, the first column 11 and the second column 12 may be arranged in parallel in the Y-axis direction. Specifically, in the Y-axis direction, the first mounting surface 113 and the third mounting surface 123 are disposed opposite to each other, and the second mounting surface 114 and the fourth mounting surface 124 are disposed opposite to each other. A spacing L2 between the first end portion 112 and the second end portion 122 is less than a spacing L1 between the first column body 111 and the second column body 121. The spacing L1 between the first column body 111 and the second column body 121 refers to a distance between the first mounting surface 113 and the third mounting surface 123. The spacing L2 between the first end portion 112 and the second end portion 122 refers to a distance between the second mounting surface 114 and the fourth mounting surface 124. In the present application, by reducing the spacing between the first end portion 112 and the second end portion 122, when a base 21 is mounted on the frame module 10, the base 21 can be more precisely confined between the first end portion 112 and the second end portion 122, thereby improving the accuracy of the fit between the base 21 and the frame module 10 and further enhancing the structural stability of the 3D printer 100.

One end of the top rod 13 is connected to one end of the first column body 111 facing away from the first end portion 112, and the other end of the top rod is connected to one end of the second column body 121 facing away from the second end portion 122. The mounting seat 14 is connected between the first mounting surface 113 of the first end portion 112 and the second mounting surface 114 of the second end portion 122, and the top rod 13 and the mounting seat 14 are spaced apart from each other in the Z-axis direction. The guide rod 15 is located between the top rod 13 and the mounting seat 14, and two ends of the guide rod 15 in the Y-axis direction are slidably connected to the first column body 111 and the second column body 121, respectively. It can be understood that the guide rod 15 can slide up and down along the Z-axis direction relative to the first column 11 and the second column 12. In addition, the printing head 30 is slidably connected to the guide rod 15, and the printing head 30 can move along an extending direction of the guide rod 15, i.e., the Y-axis direction. It can be understood that after the printing head 30 is mounted on the frame module 10, the frame module 10 enables displacement of the printing head 30 in the Y-axis direction and the Z-axis direction.

As shown in FIG. 3, the mounting seat 14 includes a first mounting portion 141 and a second mounting portion 142, and the second mounting portion 142 extends along the Y-axis direction and is connected between the first column 11 and the second column 12. Illustratively, the second mounting portion 142 is connected between the first end portion 112 and the second end portion 122. One end of the first mounting portion 141 is fixedly connected to the second mounting portion 142, and the other end of the first mounting portion 141 protrudes from the second mounting portion 142 and extends along the length direction (X-axis direction) of the 3D printer 100.

The second mounting portion 142 is substantially in the shape of an elongated rectangle, and the second mounting portion 142 includes a first side surface 1421, a second side surface 1422, a third side surface 1423, and two end surfaces (not labeled in FIG. 3). The first side surface 1421 and the second side surface 1422 are disposed back to back in the X-axis direction. The two end surfaces are disposed back to back in the Y-axis direction and are both connected between the first side surface 1421 and the second side surface 1422. The third side surface 1423 is connected between the first side surface 1421 and the second side surface 1422, and is connected between the two end surfaces. The second mounting portion 142 is provided with a connecting groove (not shown in FIG. 3), and the connecting groove is configured for mounting the first mounting portion 141. The connecting groove, formed in the third side surface 1423, is recessed toward the interior of the second mounting portion 142 and penetrates through the first side surface 1421 in the X-axis direction. In this embodiment, the connecting groove penetrates through the second mounting portion 142 in the X-axis direction, that is, through the first side surface 1421 and the second side surface 1422. It can be understood that the connecting groove in this embodiment is a through groove.

The second mounting portion 142 is further provided with a first protruding rib 1425 and a second protruding rib 1426. The first protruding rib 1425 protrudes from the first side surface 1421, protrudes in a direction facing away from the second side surface 1422, and extends along the Y-axis direction. The second protruding rib 1426 protrudes from the second side surface 1422, protrudes in a direction facing away from the first side surface 1421, and extends along the Y-axis direction. The second mounting portion 142 is further provided with a second fixing hole 1427, and an opening of the second fixing hole 1427 faces the same direction as the third side surface 1423. In this embodiment, a plurality of second fixing holes 1427 are provided. The plurality of second fixing holes 1427 form two second fixing hole groups. The two second fixing hole groups are a third sub-fixing hole group 1428 and a fourth sub-fixing hole group 1429, the third sub-fixing hole group 1428 is formed in the first protruding rib 1425, and the fourth sub-fixing hole group 1429 is formed in the second protruding rib 1426.

The third sub-fixing hole group 1428 is formed in a surface of the first protruding rib 1425 facing the third side surface 1423 and is recessed in a direction facing away from the third side surface 1423. In this embodiment, the third sub-fixing hole group 1428 has two second fixing holes 1427. In a length direction of the second mounting portion 142, the two second fixing holes 1427 of the third sub-fixing hole group 1428 are respectively located on two sides of the connecting groove. In other embodiments, the number of the second fixing holes 1427 included in the third sub-fixing hole group 1428 is not specifically limited.

The fourth sub-fixing hole group 1429 is formed in a surface of the second protruding rib 1426 facing the third side surface 1423 and is recessed in a direction facing away from the third side surface 1423. In this embodiment, the fourth sub-fixing hole group 1429 has two second fixing holes 1427. The two second fixing holes 1427 of the fourth sub-fixing hole group 1429 are spaced apart from each other in the Y-axis direction. In other embodiments, the number of the second fixing holes 1427 included in the fourth sub-fixing hole group 1429 is not specifically limited.

The first mounting portion 141 is mounted in the connecting groove. The first mounting portion 141 is substantially rectangular in shape. The first mounting portion 141 includes a first surface 1411, a second surface 1412, and a third surface 1413. The second surface 1412 and the third surface 1413 are disposed back to back in the Y-axis direction, and the first surface 1411 is connected between the second surface 1412 and the third surface 1413. In this embodiment, the first mounting portion 141 is a hollow body, and the first mounting portion 141 may be made of a thin-sheet metal member through processes such as bending, stamping, shearing, and welding.

The first mounting portion 141 is further provided with a first fixing hole 1414, and an opening of the first fixing hole 1414 faces the same direction as the first surface 1411. In this embodiment, a plurality of first fixing holes 1414 are provided. The plurality of first fixing holes 1414 form two first fixing hole groups. Each first fixing hole group is formed in the first surface 1411 and is recessed toward the interior of the first mounting portion 141. The two first fixing hole groups are a first sub-fixing hole group 1415 and a second sub-fixing hole group 1416, and the first sub-fixing hole group 1415 and the second sub-fixing hole group 1416 are spaced apart from each other in the Y-axis direction. In this embodiment, the first sub-fixing hole group 1415 has four first fixing holes 1414, and the four first fixing holes 1414 are spaced apart from each other in the X-axis direction; the second sub-fixing hole group 1416 has four first fixing holes 1414, and the four first fixing holes 1414 are spaced apart from each other in the X-axis direction. In other embodiments, the number of the fixing holes included in the first sub-fixing hole group 1415 and the second sub-fixing hole group 1416 is not specifically limited.

The first mounting portion 141 is mounted and fixed in the connecting groove, the first surface 1411 of the first mounting portion 141 faces the same direction as the third side surface 1423, and the second surface 1412 and the third surface 1413 of the first mounting portion 141 are connected and fixed to a groove wall surface of the connecting groove. The first mounting portion 141 protrudes from the second mounting portion 142 in the X-axis direction, forming a T-shaped mounting seat 14. For the mounting seat 14 according to this embodiment, by providing the first mounting portion 141 protruding from the second mounting portion 142 in the length direction (X-axis direction) of the 3D printer 100, the center of gravity of the frame module 10 is lowered, the structural stability of the frame module 10 is enhanced, and the possibility of instability of the frame module 10 is reduced.

The mounting seat 14 is connected between the first column 11 and the second column 12. Specifically, the two end surfaces of the second mounting portion 142 are connected to the first mounting surface 113 of the first end portion 112 and the second mounting surface 114 of the second end portion 122, respectively. The first surface 1411 of the first mounting portion 141 and the third side surface 1423 of the second mounting portion 142 both face the guide rod 15.

The 3D printer 100 further includes a motor 40. The motor 40 is connected to the second side surface 1422 of the second mounting portion 142 and is configured to drive the print table of the 3D printer 100.

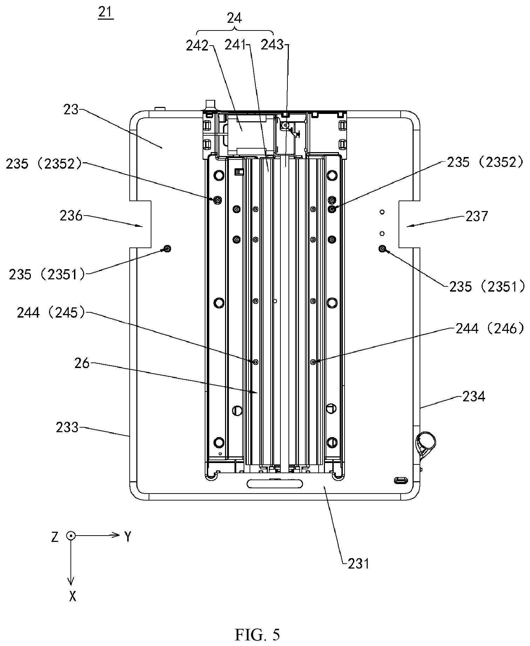

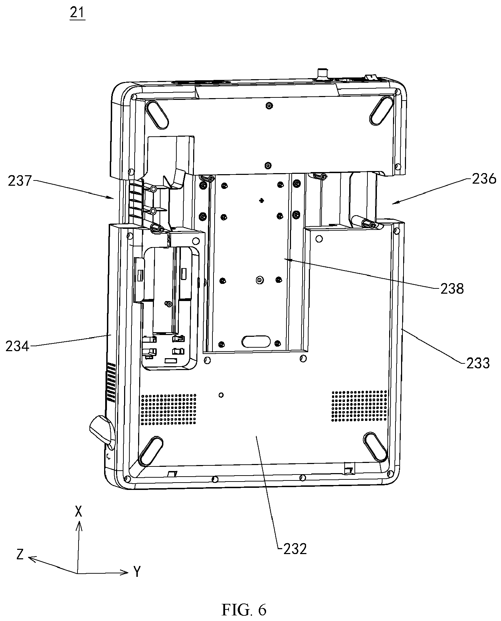

Referring to FIGs. 4 to 6 together, FIG. 4 is a schematic structural diagram of the printing module 20 shown in FIG. 1. FIG. 5 is a schematic structural diagram of the base 21 shown in FIG. 4 from one angle. A cover plate 25 of the base 21 is omitted therein. FIG. 6 is a schematic structural diagram of the base 21 shown in FIG. 4 from another angle.

For ease of description, a width direction of the printing module 20 is set to be consistent with the width direction of the 3D printer 100, that is, the Y-axis direction; a length direction of the printing module 20 is set to be consistent with the length direction of the 3D printer 100, that is, the X-axis direction; a thickness direction of the printing module 20 is set to be consistent with the height direction of the 3D printer 100, that is, the Z-axis direction.

As shown in FIG. 4, the printing module 20 includes a base 21 and a print table 22. The base 21 extends between the first column 11 and the second column 12. One side of the base 21 is connected to the mounting seat 14, and one side of the base 21 facing away from the mounting seat 14 is slidably connected to the print table 22. Specifically, as shown in FIGs. 4 and 5, the base 21 includes a base body 23, a sliding member 24, and a cover plate 25. The base body 23 is provided with an accommodating groove 26, the sliding member 24 is mounted in the accommodating groove 26, and the cover plate 25 is detachably mounted on the base body 23 and covers part of an opening of the accommodating groove 26. The print table 22 is slidably connected to the sliding member 24 and is movable, relative to the base 21, in the length direction (X-axis direction) of the 3D printer 100.

The sliding member 24 includes a main body 241, a driving member 242, and a conveyor belt 243. The conveyor belt 243 is mounted on the main body 241 and is connected to the print table 22. A conveying direction of the conveyor belt 243 is parallel to the X-axis direction. The driving member 242 is connected to one end of the conveyor belt 243, and the driving member 242 is configured to drive the conveyor belt 243, such that the conveyor belt 243 drives the print table 22 to move relative to the main body 241.

The sliding member 24 is provided with a first mounting hole 244, and the first mounting hole 244 is formed in the main body 241 and penetrates through the main body 241 in the Z-axis direction. In this embodiment, a plurality of first mounting holes 244 are provided, and the plurality of first mounting holes 244 form two first mounting hole groups. The two first mounting hole groups are a first sub-mounting hole group 245 and a second sub-mounting hole group 246. In the Y-axis direction, the first sub-mounting hole group 245 and the second sub-mounting hole group 246 are respectively located on two sides of the conveyor belt 243. In this embodiment, the first sub-mounting hole group 245 has four first mounting holes 244, and the four first mounting holes 244 are spaced apart from each other in the X-axis direction; the second sub-mounting hole group 246 has four first mounting holes 244, and the four first mounting holes 244 are spaced apart from each other in the X-axis direction. In other embodiments, the number of the first mounting holes 244 included in the first sub-mounting hole group 245 and the second sub-mounting hole group 246 is not specifically limited.

Referring to FIGs. 5 and 6 together, the base body 23 includes a first surface 231, a second surface 232, a third surface 233, and a fourth surface 234. The first surface 231 and the second surface 232 are disposed back to back in the Z-axis direction. The third surface 233 and the fourth surface 234 are disposed back to back in the Y-axis direction and are both connected between the first surface 231 and the second surface 232. The base body 23 is provided with an accommodating groove 26, a second mounting hole 235, a first clamping portion 236, a second clamping portion 237, and a mounting groove 238.

The opening of the accommodating groove 26 faces the first surface 231, and the accommodating groove 26 is recessed in a direction from the first surface 231 to the second surface 232. The accommodating groove 26 is configured to accommodate the sliding member 24. The second mounting hole 235 penetrates through the base body 23 in the Z-axis direction. In this embodiment, a plurality of second mounting holes 235 are provided, and the plurality of second mounting holes 235 form two second mounting hole groups. The two second mounting hole groups are a third sub-mounting hole group 2351 and a fourth sub-mounting hole group 2352. In the X-axis direction, the third sub-mounting hole group 2351 and the fourth sub-mounting hole group 2352 are spaced apart from each other. In this embodiment, the third sub-mounting hole group 2351 has two second mounting holes 235. In the Y-axis direction, the two second mounting holes 235 of the third sub-mounting hole group 2351 are respectively located on two sides of the accommodating groove 26. The fourth sub-mounting hole group 2352 has two second mounting holes 235. In the Y-axis direction, the two second mounting holes 235 of the fourth sub-mounting hole group 2352 are respectively located on the two sides of the accommodating groove 26. In other embodiments, the number of the second mounting holes 235 included in the third sub-mounting hole group 2351 and the fourth sub-mounting hole group 2352 is not specifically limited.

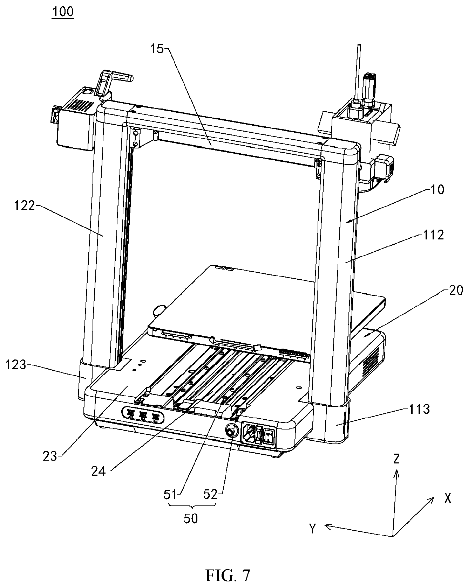

The first clamping portion 236, formed in the third surface 233, is recessed toward the fourth surface 234 and penetrates through the first surface 231 and the second surface 232 in the Z-axis direction. The second clamping portion 237, formed in the fourth surface 234, is recessed toward the third surface 233 and penetrates through the first surface 231 and the second surface 232 in the Z-axis direction. The mounting groove 238 is formed in the second surface 232 and penetrates through the base body 23 in the Y-axis direction. In this embodiment, in the Y-axis direction, the mounting groove 238 is in communication with both the first clamping portion 236 and the second clamping portion 237. The mounting groove 238 is configured to accommodate the mounting seat 14 and the motor 40. Referring to FIG. 7 together, FIG. 7 is a schematic diagram of an assembly structure of the 3D printer 100 shown in FIG. 1. The cover plate 25 of the printing module 20 is omitted therein.

For ease of description, the direction from the printing module 20 toward the guide rod 15 is defined as the positive Z-axis direction, and the direction from the guide rod 15 toward the printing module 20 is defined as the negative Z-axis direction. The directional terms such as "up" and "down" mentioned in the description of the embodiments of the present application are based on the orientation shown in FIG. 7 of the specification. "Up" is defined as the positive Z-axis direction, and "down" is defined as the negative Z-axis direction. Such descriptions do not constitute a limitation on the 3D printer 100 in actual application scenarios.

The 3D printer 100 further includes a fixing member 50. The fixing member 50 is configured to connect the base 21 and the mounting seat 14. The fixing member 50 includes a first fixing member 51 and a second fixing member 52. The first fixing member 51 is configured to connect the sliding member 24 and the first mounting portion 141, and the second fixing member 52 is configured to connect the base body 23 and the second mounting portion 142. In this embodiment, the first fixing member 51 and the second fixing member 52 are both screws, the first fixing member 51 is configured to sequentially pass through the first mounting hole 244 and the first fixing hole 1414 so as to threadedly connect the sliding member 24 and the first mounting portion 141, and the second fixing member 52 is configured to sequentially pass through the second mounting hole 235 and the second fixing hole 1427 so as to threadedly connect the base body 23 and the second mounting portion 142. In other embodiments, the fixing member 50 may also be an adhesive layer configured to bond the base 21 and the mounting seat 14. Alternatively, the fixing member 50 may also be a magnetic attraction member. Illustratively, the fixing member 50 may include two magnets with opposite magnetic polarities. One magnet is fixedly connected to the surface of the base 21 facing the mounting seat 14, and the other magnet is fixedly connected to the surface of the mounting seat 14 facing the base 21. When the base 21 is mounted on the mounting seat 14, the two magnets with opposite magnetic polarities face each other, generating an attractive force to magnetically connect the base 21 and the mounting seat 14.

Illustratively, the first fixing member 51 includes at least two sub-fixing members, and the at least two sub-fixing members are located on the two sides of the conveyor belt 243 in the Y-axis direction. For example, adhesive layers are applied between the base 21 and the mounting seat 14 on the two sides of the conveyor belt 243 in the Y-axis direction; or magnetic attraction members are disposed between the base 21 and the mounting seat 14 on the two sides of the conveyor belt 243 in the Y-axis direction.

The printing module 20 is mounted in the frame module 10. In the 3D printer 100 according to the embodiments of the present application, by integrating parts and components into the frame module 10 and the printing module 20, the 3D printer 100 can be assembled simply by connecting the frame module 10 and the printing module 20. This significantly simplifies the assembly steps of the 3D printer 100, reduces the assembly difficulty, and shortens the assembly time. In addition, compared with an integral 3D printer 100, the detachable frame module 10 and printing module 20 can reduce the volume and cost of the 3D printer 100 during packaging, transportation, and storage, thereby reducing logistics costs and storage costs.

Specifically, the base 21 of the printing module 20 extends between the first column 11 and the second column 12, the first clamping portion 236 and the first column 11 are in clamping engagement with each other, and the second clamping portion 237 and the second column 12 are in clamping engagement with each other. In this embodiment, the first clamping portion 236 of the base body 23 clamps the first end portion 112 of the first column 11, and the second clamping portion 237 clamps the second end portion 122, thereby restricting the movement of the base 21 in the Y-axis direction and the X-axis direction and improving the structural stability of the 3D printer 100.

In other embodiments, the first column 11 and the second column 12 may both be column bodies. The first clamping portion 236 may be in clamping engagement with any portion of the outer peripheral surface of the first column 11, without being limited to the end portion; the second clamping portion 237 may be in clamping engagement with any portion of the outer peripheral surface of the second column 12, without being limited to the end portion.

The mounting seat 14 and the motor 40 are both accommodated in the mounting groove 238 of the base body 23, and the second surface 232 of the base body 23 and the surface of the mounting seat 14 facing away from the guide rod 15 are located in the same plane (with an allowable tolerance range). The mounting seat 14 is accommodated in the mounting groove 238 of the base 21, which further restricts the movement of the base 21 in the Y-axis direction and the X-axis direction, thereby improving the assembly stability of the 3D printer 100. Moreover, the second surface 232 of the base body 23 and the surface of the mounting seat 14 facing away from the guide rod 15 are in the same plane, such that when the assembled 3D printer 100 is in operation, the second surface 232 of the base body 23 and the surface of the mounting seat 14 facing away from the guide rod 15 can both be in contact with a placement surface, such as the ground or a table top. This is conducive to improving the structural stability of the 3D printer 100 and enhancing the operational stability of the 3D printer 100.

The first mounting hole 244 of the sliding member 24 is in communication with the first fixing hole 1414 of the first mounting portion 141, and the first fixing member 51 sequentially passes through the first mounting hole 244 and the first fixing hole 1414 in the negative Z-axis direction. The second mounting hole 235 of the sliding member 24 is in communication with the second fixing hole 1427 of the second mounting portion 142, and the second fixing member 52 sequentially passes through the second mounting hole 235 and the second fixing hole 1427 in the negative Z-axis direction. Specifically, each first mounting hole 244 of the first sub-mounting hole group 245 is in communication with one first fixing hole 1414 of the first sub-fixing hole group 1415, and each first mounting hole 244 of the second sub-mounting hole group 246 is in communication with one first fixing hole 1414 of the second sub-fixing hole group 1416. In the Y-axis direction, the first sub-mounting hole group 245 and the second sub-mounting hole group 246 are respectively located on the two sides of the conveyor belt 243. This is conducive to improving the connection stability of the conveyor belt 243 and the sliding member 24 with the first mounting seat 14. Each second mounting hole 235 of the third sub-mounting hole group 2351 is in communication with one second fixing hole 1427 of the third sub-fixing hole group 1428, and each second mounting hole 235 of the fourth sub-mounting hole group 2352 is in communication with one second fixing hole 1427 of the fourth sub-fixing hole group 1429. The third sub-fixing hole group 1428 is formed in the first protruding rib 1425, and the fourth sub-fixing hole group 1429 is formed in the second protruding rib 1426. Therefore, the third sub-fixing hole group 1428 and the fourth sub-fixing hole group 1429 are disposed opposite to each other in the X-axis direction, which is conducive to improving the connection stability between the base body 23 and the second mounting seat 14.

In the 3D printer 100 according to the embodiments of the present application, by providing the mounting seat 14 connected to the first column 11 and the second column 12, the mounting seat 14 is connected to the base 21 to form the 3D printer 100 by assembly. The 3D printer 100 according to the embodiments of the present application can be assembled simply by connecting the mounting seat 14 to the base 21, thereby simplifying the assembly steps of the 3D printer 100 and shortening the assembly time. Moreover, the mounting seat 14 and the base 21 have a large connection area, and thus are firmly connected, which improves the structural stability of the 3D printer 100 and enhances the operational stability of the 3D printer 100.

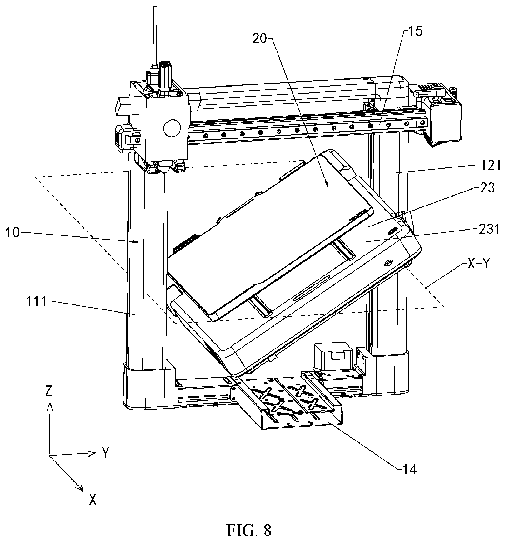

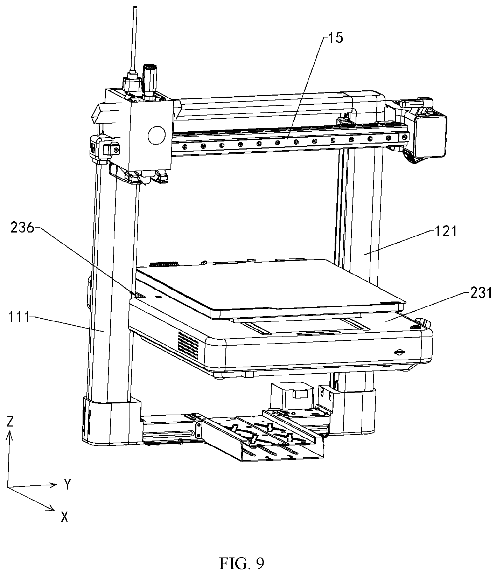

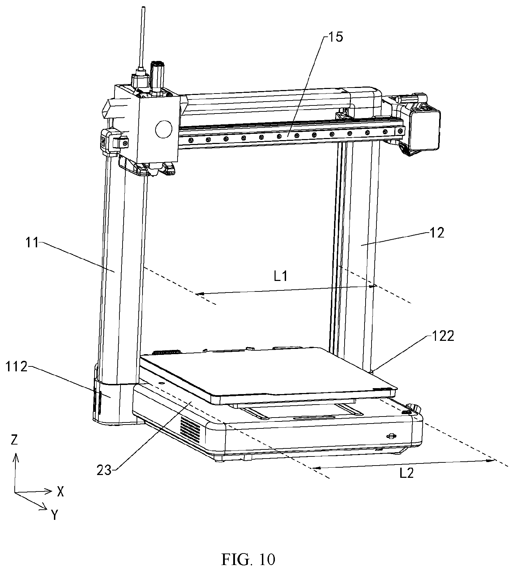

Referring to FIGs. 8 to 10 together, FIG. 8 is a first schematic assembly diagram of the printing module 20 and the frame module 10 shown in FIG. 1, FIG. 9 is a second schematic assembly diagram of the printing module 20 and the frame module 10 shown in FIG. 1, and FIG. 10 is a third schematic assembly diagram of the printing module 20 and the frame module 10 shown in FIG. 1. The assembly process of the 3D printer 100 is as follows:
First, the printing module 20 is tilted by a predetermined angle around the X-axis and then inserted between the first column 11 and the second column 12 of the frame module 10.

As shown in FIG. 8, for ease of description, the width direction of the frame module 10 is set to be consistent with the width direction of the 3D printer 100, that is, the Y-axis direction; the thickness direction of the frame module 10 is set to be consistent with the length direction of the 3D printer 100, that is, the X-axis direction; the height direction of the frame module 10 is set to be consistent with the height direction of the 3D printer 100, that is, the Z-axis direction.

In this embodiment, the printing module 20 in the initial state is rotated by 45 degrees counterclockwise around the X-axis, and then inserted between the first column body 111 and the second column body 121 and between the guide rod 15 and the mounting seat 14. It can be understood that the predetermined angle in this embodiment is 45 degrees. The printing module 20 in the initial state refers to that the first surface 231 of the base body 23 of the printing module 20 faces the guide rod 15 and is parallel to the X-Y plane (with an allowable tolerance). After the printing module 20 in the initial state is rotated by 45 degrees around the X-axis, the included angle between the first surface 231 and the X-Y plane is 45 degrees. In other embodiments, the predetermined angle may be 30 degrees, 60 degrees, 90 degrees, or other angles to facilitate the insertion of the printing module 20 into the frame module 10, and the specific angle is not limited.

Then, the printing module 20 is rotated back by a predetermined angle around the X-axis, such that the first clamping portion 236 of the printing module 20 clamps the first column body 111 of the frame module 10, and the second clamping portion 237 of the printing module 20 clamps the second column body 121 of the frame module 10.

As shown in FIG. 9, the inclined printing module 20 is rotated clockwise by 45 degrees around the X-axis, such that the first surface 231 of the printing module 20 faces the guide rod 15 and is parallel to the X-Y plane (with an allowable tolerance). In this case, the first clamping portion 236 of the printing module 20 clamps the first column body 111 of the frame module 10, and the second clamping portion 237 of the printing module 20 clamps the second column body 121 of the frame module 10.

Next, the printing module 20 is mounted on the mounting seat 14 of the frame module 10, such that the first clamping portion 236 clamps the first end portion 112 of the frame module 10, and the second clamping portion 237 clamps the second end portion 122 of the frame module 10.

As shown in FIGs. 3, 6, and 10, the printing module 20 is moved downward along the negative Z-axis direction and mounted on the mounting seat 14. Specifically, the mounting seat 14 is accommodated in the mounting groove 238 of the base body 23, and the second surface 232 of the base body 23 and the surface of the mounting seat 14 facing away from the guide rod 15 are located in the same plane (with an allowable tolerance range). The first clamping portion 236 of the base body 23 clamps the first end portion 112 of the first column 11, and the second clamping portion 237 clamps the second end portion 122. Since the spacing L2 between the first end portion 112 and the second end portion 122 is less than the spacing L1 between the first column body 111 and the second column body 121, the base body 23 can be more precisely confined between the first end portion 112 and the second end portion 122, thereby improving the accuracy of the fit between the printing module 20 and the frame module 10 and further enhancing the structural stability of the 3D printer 100.

Finally, the first fixing member 51 sequentially passes through the first mounting hole 244 and the first fixing hole 1414, and the second fixing member 52 sequentially passes through the second mounting hole 235 and the second fixing hole 1427 to fix the printing module 20 and the frame module 10. Then, the cover plate 25 is closed to partially seal the accommodating groove 26.

As shown in FIG. 7, in the negative Z-axis direction, the first fixing member 51 sequentially passes through the first mounting hole 244 and the first fixing hole 1414 to fix the sliding member 24 and the first mounting seat 14, and the second fixing member 52 sequentially passes through the second mounting hole 235 and the second fixing hole 1427 to fix the base body 23 and the second mounting seat 14. During the assembly of the 3D printer 100 according to the embodiments of the present application, the printing module 20 is mounted on the mounting seat 14 of the frame module 10 in the negative Z-axis direction. The first fixing member 51 sequentially passes through the first mounting hole 244 and the first fixing hole 1414 in the negative Z-axis direction, and the second fixing member 52 sequentially passes through the second mounting hole 235 and the second fixing hole 1427 in the negative Z-axis direction. Therefore, the assembly direction of the 3D printer 100 according to the present application is always the negative Z-axis direction, that is, the direction from the guide rod 15 toward the mounting seat 14, without any assembly in the positive Z-axis direction. It can be understood that during the assembly process, the 3D printer 100 according to the present application follows a consistent assembly direction and always remains a top-to-bottom working mode, without the need for flipping operations, thereby reducing the assembly difficulty and significantly shortening the assembly time of the 3D printer 100.

The embodiments of the present application are described in detail above. Specific examples are applied herein to explain the principle and the embodiments of the present application. The description of the embodiments above is only used for helping to understand the method and the core idea of the present application; meanwhile, for those of ordinary skill in the art, according to the idea of the present application, the specific embodiments and the application range may be changed. In summary, the content of this specification should not be construed as a limitation to the present application.

## Claims

1. A 3D printer, wherein the 3D printer comprises a first column, a second column, a mounting seat, and a base, wherein the first column and the second column are spaced apart from each other, and the mounting seat is connected between the first column and the second column;
the base extends between the first column and the second column, one side of the base is connected to the mounting seat, and the other side of the base facing away from the mounting seat is configured to be slidably connected to a print table of the 3D printer.

2. The 3D printer according to claim 1, wherein the base is provided with a first clamping portion and a second clamping portion on both sides in a width direction of the 3D printer, and the first clamping portion and the second clamping portion penetrate through the base along a height direction of the 3D printer;
an opening direction of the first clamping portion and an opening direction of the second clamping portion are disposed back to back, the first clamping portion and the first column are in clamping engagement with each other, and the second clamping portion and the second column are in clamping engagement with each other.

3. The 3D printer according to claim 2, wherein the first column comprises a first column body and a first end portion, the first end portion being connected to one end of the first column body; the second column comprises a second column body and a second end portion, the second end portion being connected to one end of the second column body; in the width direction of the 3D printer, a spacing between the first column body and the second column body is greater than a spacing between the first end portion and the second end portion;
the mounting seat is connected between the first end portion and the second end portion, the first clamping portion and the first end portion are in clamping engagement with each other, and the second clamping portion and the second end portion are in clamping engagement with each other.

4. The 3D printer according to any one of claims 1 to 3, wherein the mounting seat comprises a first mounting portion and a second mounting portion, the second mounting portion extends along the width direction of the 3D printer and is connected between the first column and the second column, one end of the first mounting portion is fixedly connected to the second mounting portion, and the other end of the first mounting portion protrudes from the second mounting portion and extends along a length direction of the 3D printer.

5. The 3D printer according to claim 4, wherein the base comprises a base body and a sliding member; the sliding member is mounted on the base body and is configured to be slidably connected to the print table; the base body extends between the first column and the second column and is connected to the mounting seat.

6. The 3D printer according to claim 5, wherein the 3D printer further comprises a first fixing member and a second fixing member, the first fixing member connects the sliding member and the first mounting portion, and the second fixing member connects the base body and the second mounting portion.

7. The 3D printer according to claim 6, wherein the sliding member comprises a main body and a conveyor belt, the conveyor belt is mounted on the main body and is connected to the print table, and a conveying direction of the conveyor belt is parallel to the length direction of the 3D printer;
the first fixing member comprises at least two sub-fixing members, and the at least two sub-fixing members are respectively disposed on two sides of the conveyor belt in the width direction of the 3D printer.

8. The 3D printer according to claim 6 or 7, wherein the sliding member is provided with a first mounting hole, and the first mounting hole penetrates through the sliding member in the height direction of the 3D printer; the base body is provided with a second mounting hole, and the second mounting hole penetrates through the base body in the height direction of the 3D printer;
the first mounting portion is provided with a first fixing hole, the second mounting portion is provided with a second fixing hole, and an opening of the first fixing hole and an opening of the second fixing hole both face the base;
the first fixing hole is in communication with the first mounting hole, and the first fixing member passes through the first mounting hole and the first fixing hole; the second fixing hole is in communication with the second mounting hole, and the second fixing member passes through the second mounting hole and the second fixing hole.

9. The 3D printer according to claim 8, wherein the sliding member comprises a main body and a conveyor belt, the conveyor belt is mounted on the main body and is connected to the print table, and a conveying direction of the conveyor belt is parallel to the length direction of the 3D printer;
a plurality of first mounting holes are provided, the plurality of first mounting holes form two first mounting hole groups, and in the width direction of the 3D printer, the two first mounting hole groups are respectively located on two sides of the conveyor belt.

10. The 3D printer according to claim 8, wherein the second mounting portion is provided with a first protruding rib and a second protruding rib, and in the length direction of the 3D printer, the first protruding rib and the second protruding rib are respectively disposed on two sides of the second mounting portion;
a plurality of second fixing holes are provided, the plurality of second fixing holes form two second fixing hole groups, and the two second fixing hole groups are respectively formed in the first protruding rib and the second protruding rib.

11. The 3D printer according to any one of claims 1 to 10, wherein the base is provided with a mounting groove, an opening of the mounting groove faces the mounting seat, the mounting groove penetrates through the base along a width direction of the 3D printer, and the mounting seat is accommodated in the mounting groove.

12. The 3D printer according to any one of claims 1 to 11, wherein the 3D printer further comprises a guide rod, the guide rod being configured to be slidably connected to a printing head of the 3D printer;
wherein the guide rod is slidably connected between the first column and the second column and is located on one side of the base facing away from the mounting seat.

13. A 3D printing system, comprising a feeding device and the 3D printer according to any one of claims 1 to 12, wherein the feeding device is configured to provide a printing material to the 3D printer.
